# EUROPEAN PATENT SPECIFICATION

(11) **EP 3 259 177 B1**
(45) Date of publication and mention of the grant of the patent: **12.12.2018**
(21) Application number: 16713078.0
(22) Date of filing: 18.02.2016
(51) Int. Cl.: B62K 19/38, B62L 1/00, B60T 1/06

(54) **A BRAKE CALIPER ASSEMBLY AND AN ASSOCIATED SUPPORT STRUCTURE FOR DISK BRAKES**
BREMSSATTELANORDNUNG UND ZUGEHÖRIGE TRÄGERSTRUKTUR FÜR SCHEIBENBREMSEN
ENSEMBLE ÉTRIER DE FREIN ET STRUCTURE DE SUPPORT ASSOCIÉE POUR FREINS À DISQUE

(30) Priority: 18.02.2015 IT PD20150044
(43) Date of publication of application: 27.12.2017
(73) Proprietor: Alter Ego S.a.s., 00152 Roma (IT)
(72) Inventor: HOHENEGGER, Alexander, 00152 Roma (IT)
(74) Representative: Locas, Davide
(86) International application number: PCT/IB2016/050881
(87) International publication number: WO 2016/203323

(56) References cited:
- EP-A1- 0 014 101
- EP-A2- 1 006 047
- US-A- 6 164 675

## Description

The present invention relates to a brake caliper assembly and associated support structure, in particular intended to be fitted to bicycles and motor vehicles.

Calipers for disc brake systems intended for terrestrial vehicles are essentially divided into two different types.

In a first case, described for example in EP 0014101, which discloses the preamble of claim 1, the brake uses a fixed caliper, in which the brake pads are held in position by one or more holes present in a metal support of said pads using related retaining pins or slot systems. In this solution, the force of the braking action occurs on one essentially linear side, in contact with the related abutment surface present on the body of the caliper. The caliper is rigidly attached to a portion of a suspension system or of a chassis.

The pistons that press on the brake pads are necessarily opposite to the faces of the disc, and make it possible to compensate for the wear of the friction lining by maintaining the fixed position of the caliper body by means of the approach of the pistons in a symmetrical and mirror-image fashion.

In a second case, on the other hand, the brake uses a floating caliper, in which the brake pads are again held in position by one or more holes and related retaining pins and/or by means of a slot system, and the force may occur on an essentially linear or circular side depending on the type of support of said caliper.

In this type of brake, the caliper body contains the piston (or pistons), which presses (or press) on the brake pad and is (or are) preferably positioned on the outer face of the disc. The caliper body is attached to the related support in a semi-rigid manner, since it has the ability to move in translatory motion on an axis transverse to the plane of the disc in order to compensate for the wear of the friction lining, moving away progressively towards the side of the pressing piston/s. The caliper support, on the other hand, is rigidly attached to a portion of a suspension system or of a chassis. Typically, the choice of one or the other solution is based on specific design requirements, depending on the characteristics that it is necessary to exploit.

The two solutions differ particularly in terms of dimensions, sensitivity to commands, weight and resistance to stresses, for example due to impacts.

Moreover, in both cases it would be desirable to have a greater capacity for heat dispersion.

In addition, a further relatively critical aspect in the known disc brake systems is linked to the fact that it is necessary to remove the calipers in order to dismantle the wheels, and this makes the operation more complex and costly in terms of time.

The technical problem underlying the present invention is therefore that of providing a disc brake system of a type capable of being used on all motorcycle brake discs and structurally and functionally designed to possess, at the same time, characteristics normally inherent only in fixed-caliper systems or only in floating-caliper systems, while simultaneously providing an improvement in terms of heat dispersion and simplicity of dismantling.

This problem is solved by means of the brake caliper assembly and associated support structure according to claim 1.

Preferred features of the invention are defined in the dependent claims.

The present invention makes it possible to provide a braking system in which there is a high braking force and, at the same time, a good resistance to impacts and stresses. The present invention is also particularly flexible both in terms of positioning and in terms of dimensions and therefore braking performance.

Moreover, these advantages have the consequence of providing excellent performance in terms of heat dispersion. In addition, the invention makes it possible to dismantle the wheel without necessarily having to remove the caliper.

Moreover, according to preferred features of the present invention, the invention makes it possible to limit the torsional stresses on the brake caliper during the phases of braking.

In addition, the support can be easily fitted in a relatively simple manner, adapting easily to traditional forks.

The characteristics and further advantages of the invention will be made clearer by the following detailed description of a preferred but non-exclusive embodiment, illustrated by way of non-limitative example with reference to the accompanying drawings, in which:
- Figure 1 is a perspective view of a front fork comprising a wheel rim and the brake caliper assembly and associated support structure according to the present invention;
- Figure 2 is a perspective view of the fork of Figure 1, from which the wheel and one tube/stanchion unit have been removed for greater clarity of illustration;
- Figure 3 is an illustration of the fork of Figure 2 from a different perspective view;
- Figures 4A and 4B are two different perspective views of the brake caliper according to the present invention; and
- Figures 5A and 5B are two exploded views, from different points of view, of the brake caliper assembly and associated support structure according to the present invention.

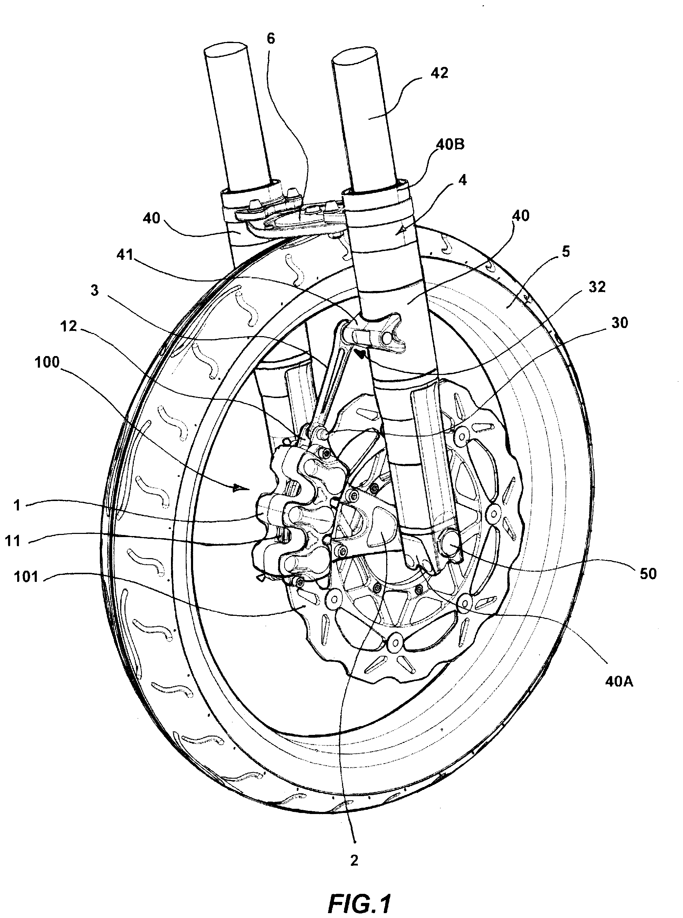

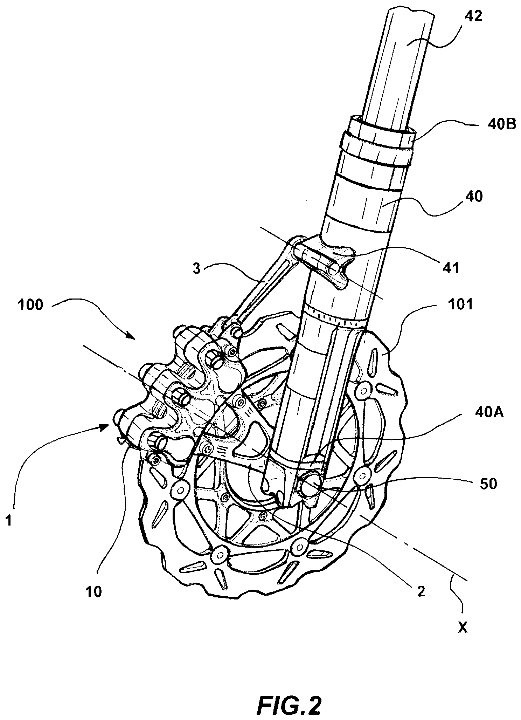

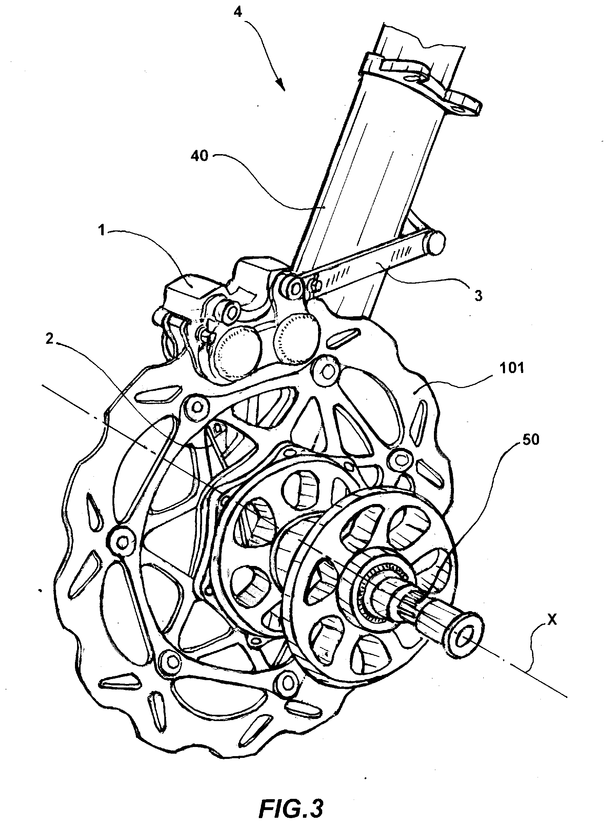

With reference initially to Figure 1, the front wheel 5 of a motorcycle is shown, fitted to a conventional fork 4, having a pair of tubes 40 connected to an axle pin 50 of the wheel 5, in the hub of the same, which defines an axis of rotation X, as illustrated more clearly in Figures 2 and 3.

It is noted that hereinafter, the word "fork" will be used to mean telescopic front suspension systems.

Regardless of the construction characteristics, "telescopic" in the context of the present invention will be considered to mean a suspension system in which there is an axial sliding between the fixed part, in this case the stanchion, and the moving part, in this case the tube, the former being attached to the sprung mass of the chassis and the latter to the unsprung mass of the wheel.

The tubes 40 therefore have a lower end 40A connected to the axle pin 50 of the wheel 5, and an upper end 40B through which are inserted respective stanchions 42 of the suspension system incorporated into the fork 4.

The upper ends of the two tubes 40 are optionally connected to each other by a lower bridge piece, not shown in Figure 6, i.e. a connecting bridge forming part of the unsprung mass of the wheel 5.

Said upper ends also identify an upper portion of the tube 4.

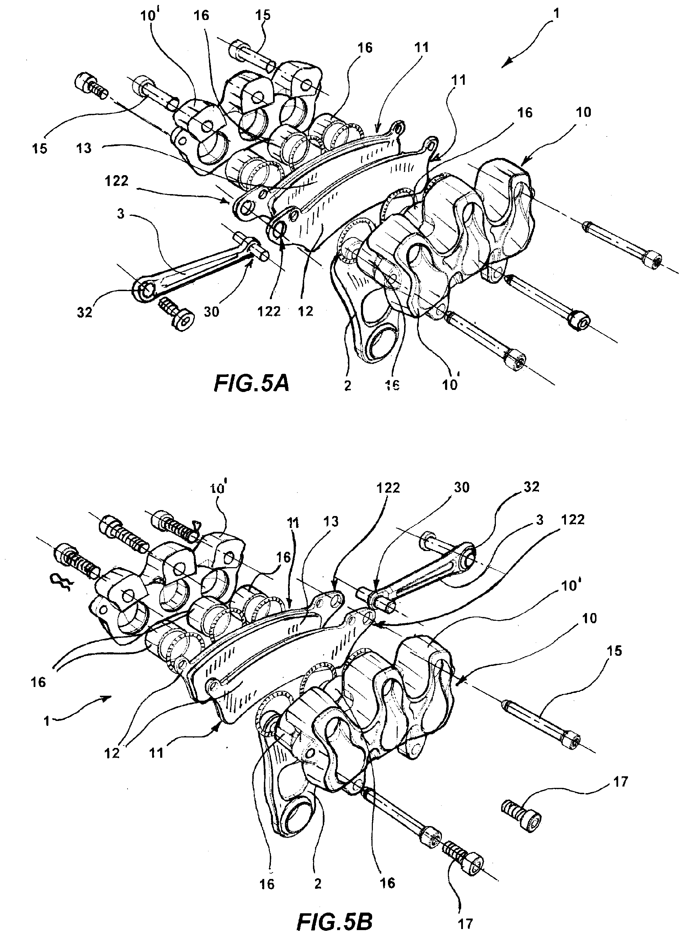

A braking system of the wheel 5 is indicated as a whole by the reference number 100 and comprises a brake disc 101 with a related brake caliper 1, connected to the tube 40 by means of a support structure in a manner that will be illustrated in detail below. Therefore, with reference also to Figures 5A and 5B, the brake caliper 1 comprises an outer casing 10 inside which are housed the brake pads 11 connected to opposing inner surfaces of the casing 10, preferably defined by half-shells 10' that form said casing.

According to a preferred embodiment, the brake pads 11 comprise a respective support element 12 and a layer of friction material 13, the latter being created in a manner that is known per se. The support elements 12 are supported in a sliding manner on the casing 10 by means of pins 15, thus allowing a motion of reciprocal approach/distancing of the brake pads 11. To this end, the support elements 12 further comprise through holes for the insertion of the pins 15.

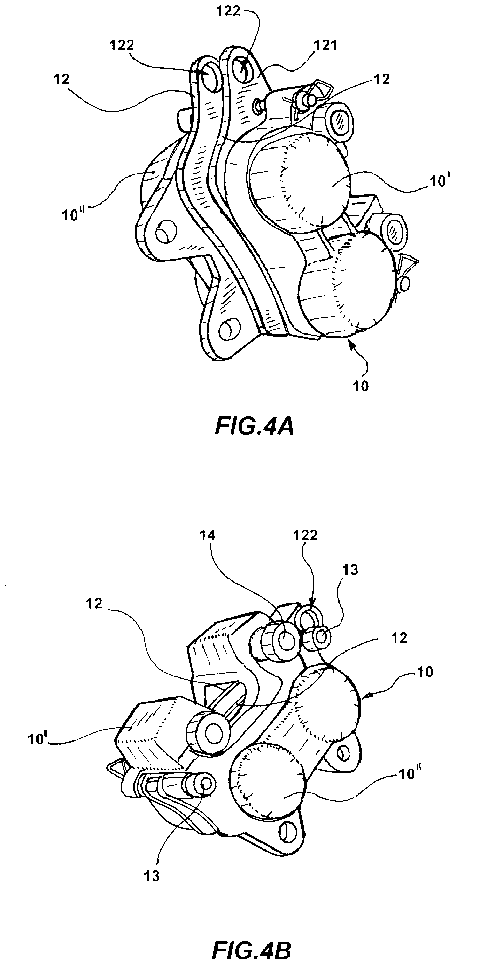

Preferably, the brake pads 11 are driven towards each other by means of pistons 16, of which in this case there are three for each pad 11. However, it is evident that a different number of pistons may be provided, as for example in the embodiment of Figures 4A and 4B, where two pistons are used for each pad. The actuation of the pistons is carried out in a manner that is known per se and will therefore not be illustrated in any greater detail. It will also be appreciated that, as will become clearer below, the present invention makes it possible, with the same external dimensions as many conventional solutions, to use a greater number of pistons of equal diameter, thus increasing the contact area of the pad.

In any case, more generally, the brake caliper of the present invention comprises means for actuating the brake pads 11 that make it possible to move them towards each other by applying a braking force on the disc 101 and to release the disc at the end of the braking. 13 that actuate the support elements 12 towards or away from the outer casing 10.

In this way, therefore, the pads 11 can be moved towards each other, imparting a braking force on the disc 101.

With reference now also to Figures 1 to 3, the support structure of the caliper comprises a connecting arm 2 and a strut element 3 intended to support the caliper 1 with respect to the fork 4.

According to a preferred embodiment, the connecting arm 2 connects the caliper 1 to the fork 4 at the level of the axis of rotation X of the wheel 5.

Preferably, the connecting arm 2 is slidably connected or connectable to the axle pin 50 of the wheel 5 along a direction parallel to the axis X. Alternatively, the connecting arm 2 may be directly connected to the tube 40 of the fork 4.

Preferably, the connecting arm is essentially fork-shaped, with the end opposite to the hub of the wheel 5 having a V or a U shape.

In the present embodiment, the connecting arm 2 and the casing 10 of the caliper 1 are fixed together by means of screws 17, in such a way that the caliper 1 and the connecting arm 2 are solidly united.

The strut element 3 extends between the support elements 12 and a fixing portion 41 arranged on the fork 4 and is capable of being subjected to compression or traction depending on the positioning of the brake caliper with respect to the axis of the fork. In the present embodiment, the strut element 3 is arranged in such a way as to be subjected to compression, the caliper 1 being arranged behind the tube 40 with respect to the direction of travel of the vehicle.

However, it should be understood that if the caliper were arranged in front rather than behind, as is the case in the embodiment of Figure 3, the strut element 3, retaining the connections described above, would continue to perform its function but subjected to traction rather than compression.

Preferably, again with reference to Figures 1, 5A and 5B, an upper end of the strut element 3 is articulated at the level of the fixing portion 41, located above the caliper 1, in an intermediate position along the tube 40. In the present embodiment, the fixing portion 41 is created directly on the structure of the tube 40. However, the application of a separate component creating the fixing portion may be provided for. According to a preferred embodiment, the strut element 3 comprises, at the level of its connecting end with the fixing portion 41, a ball joint 32 with constraint to various degrees of freedom. Advantageously, this solution allows quick dismantling of the wheel by simply removing its axle pin, making it possible to easily remove the brake caliper during the phases of dismantling.

Again with reference to Figures 1, 5A and 5B, the strut element 3 is also connected to the support elements 12 via a connecting element 30, which preferably comprises a pin with respective ends 31 slidably connected to through holes 122 created on each support element 12.

More generally, the connecting element 30 is separate and independent from the outer casing 10, relative to which the support elements 12 can slide in a direction of reciprocal approach/distancing.

In other words, the connecting element 30, and therefore the strut element 3, is connected to the outer casing 10 solely by means of the support elements 12, there being no connection directly or by means of other components between the strut element 3 and the casing 10.

Preferably, the through holes 122 are created on the respective extensions 121 of the support elements 12 projecting from the outer casing 10, or are located elsewhere while remaining reachable by the connection element 30.

According to a preferred embodiment, the extensions 121 point upwards towards the fixing portion 41, and in any event are preferably as close as possible to the disc 101. This latter characteristic makes it possible, in particular, to minimise the stresses on the pins 15. However, it should be noted that the pins 15 provide the connection between the two units formed by connecting arm 2-enclosure 10 and strut element 3-support elements 12, and suitable play must be provided between the pins 15 and the related holes.

With reference once again to Figure 2, preferably the strut element 3 lies on a plane included between the support elements 12 and, again preferably, the brake pads 11 as a whole are arranged in positions that are symmetrical to each other with respect to the plane on which the strut element 3 lies.

According to a preferred embodiment, this symmetrical arrangement also allows the outer casing to be created in two symmetrical half-shells 10', thus allowing greater simplicity from the construction point of view.

It should also be noted that, according to a preferred embodiment, the plane on which the strut element 3 lies coincides with a plane defined by the disc 5 of the brake 100. It should be noted that although in the present embodiments the upper end of the strut 3 element is connected to an intermediate portion of the tube 40, different construction solutions may also be provided for.

In particular, the upper end of the strut element 3 may also be located at the level of different portions of the suspension system or of the chassis of the vehicle, as may occur for example in the case of a rear brake or a leading-link fork of the Earles type. For example, said end may be articulated to a connecting bridge between the tubes 40, at a point adjacent to the corresponding tube. This mounting solution requires only minimal modification to a suspension system of the conventional type.

As is evident from the description given earlier, the support element 2 supports the caliper 1 which, during braking, discharges its force, driven by the disc 101, on the engagement portion of the tube 40 through the strut element 3 hinged between the support elements 12 and the tube 40.

This design eliminates the torsion on the caliper caused by the misalignment of the known systems, which necessarily provide a constraint on one side of the brake disc.

In particular, according to preferred embodiments, the strut element 3 makes it possible to discharge the force generated on the neutral axis of the caliper 1, i.e. on the centre-line plane of the disc 101, divided between the strut element 3 and the connecting arm 2.

It should also be noted that the connecting arm is arranged in a radial position with respect to the axle pin 50, the disc 101 and the caliper 1.

In the arrangement described above, preferably the axis of the strut element 3 lies essentially on the radial plane of the brake disc, in order to ensure the alignment, during braking, of the contact surfaces between the plane of the brake pads and the planes of the disc.

In addition to the elimination of twisting forces, it is noted that all the attachments between the caliper casing 10 and the support structure 2 may be fixed, like the connection between the support structure and the relevant tube.

The support according to the present invention has been described here with reference to a single brake disc and the respective tube, i.e. the tube arranged on the same side of the disc.

However, it should be understood that said support could also be provided on both discs of a twin-disc system where the discs are arranged in an essentially mirror-image fashion, or on only one disc of a twin-disc system.

The invention thus solves the proposed problem, while simultaneously providing numerous advantages. In particular, it makes it possible to separate the two functions of housing the suspension unit and supporting the brake performed by the tube 40, offering modular possibilities that are useful for adapting the entire braking system depending on the type, for example with radial or axial calipers, choice of materials and number and size of pistons.

The support structure of the caliper, and in particular the connecting arm 2, is far less stressed, working only in compression, compared with a caliper of the radial type, so that the screws attaching the caliper can be made smaller.

The symmetrical positioning with respect to the radial axis makes it possible, if the semi-shells are produced by casting or forging, to create a single mould for both sides and therefore for both calipers. Similarly, all machining operations can be identical.

Moreover, it is no longer necessary to provide a direct brake support in the tube, giving a higher degree of useful modularity for adapting the entire braking system according to the offset and diameter dimensions of the disc required for the various applications.

When the strut element 3 is connected directly to the bridge between the tubes, said tubes no longer need to withstand the torsional stresses exerted by the caliper and can therefore be made from a non-isotropic material such as carbon fibre, with a relative reduction in overall weight.

In addition, the use of an upper attachment of the strut element with an articulated constraint with multiple degrees of freedom allows the wheel to be rapidly dismantled by removing only its axle pin. This is an extremely useful characteristic in competitions, especially those of the Endurance type.

The special structure of the caliper 1, in which the support elements 12 extend outside the casing, also allows a greater exposure to the air, particularly with respect to the fixed design, thus ensuring greater dispersion of the heat before it can overheat the hydraulic fluid, which is extremely sensitive to high temperatures. By providing perforations as necessary, the surface areas of the metal supports 12 may exceed the profile of the casing 10, not being constrained within said profile.

Advantageously, when used in off-road vehicles, in the event of any deformation of the disc caused by impacts, there will be a natural self-alignment of the caliper due to the concentration of forces on the neutral axis.

Finally, as already mentioned, the separation of the forces present that normally act on a fixed caliper, those caused by the pressure of the pistons and those associated with the containment of the pads, makes it possible to eliminate the internal contact abutment between the pads and the casing of the caliper. This allows the elimination of the longitudinal end portions that are typically present in a fixed caliper, offering a larger braking surface area for the same dimensions. By way of example, the dimensions of a fixed caliper with four pistons according to the present invention are equivalent to a caliper with six pistons of equal diameter in a caliper according to the prior art, with a consequent increase in the useful surface area of the pads.

## Claims

1. A brake caliper assembly (1) and an associated support structure (2, 3) for disc brakes (100), of the type used on bicycles and motor vehicles, wherein said caliper (1) comprises an external casing (10), a pair of brake pads (11) connected to opposing surfaces of said external casing (10) and capable of being actuated by actuating means (16) in order to impart braking force on the disc (100), said brake pads (11) comprising respective support elements (12) and a layer of friction material (13), both supported in a sliding manner on said external casing (10), and wherein said support structure (2, 3) comprises a connecting arm (2) that connects the caliper (1) to the fork (4) and a strut element (3) capable of being subjected to compression or traction, **characterised in that** said strut element (3) extends between said support elements (12) and a fixing portion (41) provided on the fork (4) and is connected to said support elements (12) by means of a connecting element (30) separate and independent from said external casing (10), relative to which said support elements (12) can slide in a direction of reciprocal approach/distancing, said support elements (12) comprising a respective extension (121) in correspondence of which said strut element (3) is connected by means of said connecting element (30).

2. A brake caliper assembly (1) and support structure (2, 3) according to claim 1, wherein said extension (121) protrudes from said external casing (10).

3. A brake caliper assembly (1) and associated support structure (2, 3) according to claim 2, wherein said extensions (121) comprise a respective through hole (122) and said connecting element (30) comprises a pin with respective extremities (31) connected in sliding fashion to said through holes (122).

4. A brake caliper assembly (1) and associated support structure (2, 3) according to claim 3, wherein said respective extremities (31) are connected in pivoting fashion to said through holes (122).

5. A brake caliper assembly (1) and associated support structure (2, 3) according to any of the preceding claims, wherein said strut element (3) lies on a plane included between said support elements (12).

6. A brake caliper assembly (1) and associated support structure (2, 3) according to claim 5, wherein said support elements (12) and the associated brake pads (11) are arranged symmetrically with respect to said plane on which the strut element (3) lies.

7. A brake caliper assembly (1) and associated support structure (2, 3) according to claim 5 or 6, wherein said plane coincides with a plane defined by the disc (5) of the brake (100).

8. A brake caliper assembly (1) and associated support structure (2, 3) according to any of the preceding claims, wherein said connecting arm (2) connects the caliper (1) to the fork (4) at the axis of rotation (X) of the wheel.

9. A brake caliper assembly (1) and associated support structure (2, 3) according to claim 8, wherein said connecting arm (2) is slidably connected or connectable to a pin (50) of the wheel (5) along a direction parallel to the wheel axis (X).

## Patentansprüche

1. Bremssattelanordnung (1) und zugehörige Tragstruktur (2, 3) für Scheibenbremsen (100) des an Fahrrädern und Kraftfahrzeugen verwendeten Typs, wobei der Bremssattel (1) ein Außengehäuse (10), ein Paar von Bremsbelägen (11), die mit gegenüberliegenden Oberflächen des Außengehäuses (1d) verbunden sind und durch eine Betätigungseinrichtung (16) zum Erzeugen einer Bremskraft auf der Scheibe (100) betätigbar sind, wobei die Bremsbeläge (11) jeweilige Stützelemente (12) und eine Schicht aus Reibmaterial (13) umfassen, die beide auf dem Außengehäuse (10) verschiebbar gelagert sind, und wobei die Tragstruktur (2, 3) einen Verbindungsarm (2), der den Bremssattel (1) mit der Gabel (4) verbindet, und ein Strebenelement (3) aufweist, das einem Druck oder Zug ausgesetzt sein kann, **dadurch gekennzeichnet, dass** sich das Strebenelement (3) zwischen den Stützelementen (12) und einem Befestigungsabschnitt (41) erstreckt, der an der Gabel (4) vorgesehen ist und mit den Stützelementen (12) mittels eines Verbindungselements (30) vom Außengehäuse (10) getrennt und unabhängig verbunden ist, relativ zu dem sich die Stützelemente (12) in Richtung einer gegenseitigen Annäherung/Distanzierung verschieben können, wobei die Stützelemente (12) eine jeweilige Verlängerung (121) umfassen, gemäß der das Strebenelement (3) mittels des Verbindungselements (30) verbunden ist.

2. Bremssattelanordnung (1) und Tragstruktur (2, 3) nach Anspruch 1, wobei die Verlängerung (121) vom Außengehäuse (10) vorragt.

3. Bremssattelanordnung (1) und zugehörige Tragstruktur (2, 3) nach Anspruch 2, wobei die Verlängerungen (121) eine jeweilige Durchgangsöffnung (122) umfassen und das Verbindungselement (30) einen Stift mit jeweiligen Enden (31) aufweist, die mit den Durchgangsöffnungen (122) verschiebbar verbunden sind.

4. Bremssattelanordnung (1) und zugehörige Tragstruktur (2, 3) nach Anspruch 3, wobei die jeweiligen Enden (31) mit den Durchgangsöffnungen (122) schwenkbar verbunden sind.

5. Bremssattelanordnung (1) und zugehörige Tragstruktur (2, 3) nach einem der vorhergehenden Ansprüche, wobei das Strebenelement (3) in einer zwischen den Tragelementen (12) eingeschlossenen Ebene liegt.

6. Bremssattelanordnung (1) und zugehörige Tragstruktur (2, 3) nach Anspruch 5, wobei die Tragelemente (2) und die zugehörigen Bremsbeläge (11) symmetrisch zur Ebene angeordnet sind, auf der das Strebenelement (3) liegt.

7. Bremssattelanordnung (1) und zugehörige Tragstruktur (2, 3) nach Anspruch 5 oder 6, wobei die Ebene mit einer durch die Scheibe (5) der Bremse (100) definierten Ebene zusammenfällt.

8. Bremssattelanordnung (1) und zugehörige Tragstruktur (2, 3) nach einem der vorhergehenden Ansprüche, wobei der Verbindungsarm (2) den Bremssattel (1) mit der Gabel (4) an der Drehachse (X) des Rades verbindet.

9. Bremssattelanordnung (1) und zugehörige Tragstruktur (2, 3) nach Anspruch 8, wobei der Verbindungsarm (2) mit einem Stift (50) des Rades (5) entlang einer Richtung parallel zur Radachse (X) verschiebbar oder verbindbar verbunden ist.

## Revendications

1. Ensemble étrier de frein (1) et structure de support associée (2, 3) pour freins à disque (100), du type utilisé sur des bicyclettes et véhicules à moteur, dans lequel ledit étrier (1) comprend un boîtier externe (10), une paire de plaquettes de frein (11) raccordées à des surfaces opposées dudit boîtier externe (10) et aptes à être actionnées par des moyens d'actionnement (16) afin de donner une force de freinage sur le disque (100), lesdites plaquettes de frein (11) comprenant des éléments de support (12) respectifs et une couche de matériau de friction (13), les deux étant supportés de manière coulissante sur ledit boîtier externe (10), et dans lequel ladite structure de support (2, 3) comprend un bras de raccordement (2) qui raccorde l'étrier (1) à la fourche (4) et un élément de nervure (3) apte à être soumis à la compression ou la traction, **caractérisé en ce que** ledit élément de nervure (3) s'étend entre lesdits éléments de support (12) et une portion de fixation (41) prévue sur la fourche (4) et est raccordé auxdits éléments de support (12) au moyen d'un élément de raccordement (30) séparément et indépendamment dudit boîtier externe (10), par rapport auquel lesdits éléments de support (12) peuvent coulisser dans une direction d'approche/d'éloignement réciproque, lesdits éléments de support (12) comprenant une extension respective (121) en correspondance de laquelle ledit élément de nervure (3) est raccordé au moyen dudit élément de raccordement (30).

2. Ensemble étrier de frein (1) et structure de support (2, 3) selon la revendication 1, dans lequel ladite extension (121) fait saillie dudit boîtier externe (10).

3. Ensemble étrier de frein (1) et structure de support (2, 3) associée selon la revendication 2, dans lequel lesdites extensions (121) comprennent un trou débouchant respectif (122) et ledit élément de raccordement (30) comprend une goupille avec des extrémités respectives (31) raccordées de façon coulissante auxdits trous débouchants (122).

4. Ensemble étrier de frein (1) et structure de support (2, 3) associée selon la revendication 3, dans lequel lesdites extrémités (31) respectives sont raccordées de façon pivotante auxdits trous débouchants (122).

5. Ensemble étrier de frein (1) et structure de support (2, 3) associée selon l'une quelconque des revendications précédentes, dans lequel ledit élément de nervure (3) se trouve sur un plan inclus entre lesdits éléments de support (12).

6. Ensemble étrier de frein (1) et structure de support (2, 3) associée selon la revendication 5, dans lequel lesdits éléments de support (12) et les plaquettes de frein associées (11) sont agencés symétriquement par rapport audit plan sur lequel l'élément de nervure (3) se trouve.

7. Ensemble étrier de frein (1) et structure de support (2, 3) associée selon la revendication 5 ou 6, dans lequel ledit plan coïncide avec un plan défini par le disque (5) du frein (100).

8. Ensemble étrier de frein (1) et structure de support (2, 3) associée selon l'une quelconque des revendications précédentes, dans lequel ledit bras de raccordement (2) raccorde l'étrier (1) à la fourche (4) sur l'axe de rotation (X) de la roue.

9. Ensemble étrier de frein (1) et structure de support (2, 3) associée selon la revendication 8, dans lequel ledit bras de raccordement (2) est raccordé ou peut être raccordé de manière coulissante à une goupille (50) de la roue (5) le long d'une direction parallèle à l'axe de roue (X).
